# EUROPÄISCHE PATENTANMELDUNG

(11) **EP 1 521 349 A1**
(43) Veröffentlichungstag der Anmeldung: **06.04.2005**
(21) Anmeldenummer: 04017284.3
(22) Anmeldetag: 22.07.2004
(51) Int. Cl.: H02K 3/52, H01R 4/24

(54) **Elektrische Maschine**

(30) Priorität: 30.09.2003 DE 10347483
(71) Anmelder: ROBERT BOSCH GMBH, 70442 Stuttgart (DE)
(72) Erfinder: Hackett, Douglas-Brent, 74232 Abstatt (DE); Ballmann, Thomas, 71717 Beilstein (DE); Wehrle, Nicole, 71686 Remseck (DE); Bussmann, Manfred, 31139 Hildesheim (DE)

(57) **Zusammenfassung**

Es wird eine elektrische Maschine, insbesondere ein Startergenerator, mit Spulen (28), die über eine Verbindungsstelle mit Versorgungsleitungen (31) verbunden sind, vorgeschlagen. Es ist dabei vorgesehen, dass die Spulen (28) mit ihrem Spulendraht (34) durch Einklemmen in einer einstückigen Spuledrahtaufnahme elektrisch kontaktieren.

## Beschreibung

### Stand der Technik

Elektrische Maschinen, wie sie beispielsweise in Fahrzeugen als Startergeneratoren eingesetzt werden, benötigen elektrische Kontakte zwischen den Ständerdrähten und der entsprechenden internen oder externen Verschaltungsbaugruppe, die beispielsweise durch ein sogenanntes Busbar-System in der elektrischen Maschine dargestellt ist. Typischer Weise werden dabei die Wickelenden der Einzelspulen des Startergeneratorständers mit der Verschaltungsbaugruppe einzeln verbunden. Bei der Verfahrensauswahl bzw. Prozessentwicklung für diese Verbindung sind verschiedene Randbedingungen zu beachten. Beispielsweise ist die Stromstärke in der Einzelspule beim Einsatz eines 14-Volt-Bordnetzes hoch, Stromstärken in den Kontaktstellen von mehr als 30 A sind typisch. Die Drahtdurchmesser der Spulen liegen typischer Weise zwischen 0,8 und 2 mm. Die Lage und Orientierung der Ständerspulendrahtenden vor und nach der Kontaktierung muss definiert sein. Der Querschnitt in der Verbindungszone sollte möglichst mindestens so groß sein, wie der entsprechende Drahtquerschnitt, um den erlaubten elektrischen Kontaktwiderstand minimal zu halten.

Für derartige Kontaktierungsverfahren stehen traditionell verschiedene Möglichkeiten offen. Beispielsweise gibt es das sogenannte Ultraschallschweißen, bei dem jedoch der Draht vor der Verbindungsherstellung typischerweise abisoliert werden muss. Die Zugänglichkeit muss von zwei gegenüberliegenden Seiten gewährleistet werden, da sonst die Sonotrode bzw. der Amboss nicht eingesetzt werden kann. Die Verbindung ist üblicherweise irreversibel, so dass eine Nacharbeit oder eine Wartung nicht möglich ist.

Das Diffusionsschweißen erfordert ebenfalls das Abisolieren des Drahtes in einem separaten Arbeitsgang. Darüber hinaus ist die thermische Belastung der Umgebung rund um die Verbindungsstelle sehr hoch, so dass hier die Gefahr der Beschädigung benachbarter Bauteile gegeben ist. Auch hier ist die Zugänglichkeit auf zwei gegenüberliegenden Seiten erforderlich. Auch eine Diffusionsschweißverbindung ist irreversibel, so dass eine Nacharbeit oder Wartung nicht möglich ist.

Des Weiteren können beispielsweise Schraubkontakte zur Herstellung der Verbindung vorgesehen sein. Dieses Verfahren ist zwar gängig und sehr sicher, jedoch sind Zusatzwerkstoffe, wie beispielsweise separate Bleche und Schraubverbindungsteile erforderlich. Darüber hinaus ist das Abisolieren des Drahtes in einem separaten Arbeitsgang notwendig. Schraubverbindungen sind zwar sehr zuverlässig, aber sehr kostenintensiv.

### Vorteile der Erfindung

Die erfindungsgemäße elektrische Maschine mit den Merkmalen des Hauptanspruchs hat den Vorteil, dass durch das Einklemmen des Spulendrahts der Spulen in eine einstückige Spulendrahtaufnahme nicht nur eine sichere elektrische Verbindung herstellbar ist, sondern darüber hinaus die benötigten Teile günstig sind und die Verfahrensschritte einfach und zuverlässig.

Durch die in den Unteransprüchen aufgeführten Maßnahmen sind vorteilhafte Weiterbildungen der elektrischen Maschine nach dem Hauptanspruch möglich. Durch das seitliche Greifen des Spulendrahts in der Spulendrahtaufnahme ergibt sich die Möglichkeit, eine hohe Stromübergangsfläche zwischen Spulendraht und Spulendrahtaufnahme zu verwirklichen. Der elektrische Widerstand ist dadurch leicht gering zu halten.

Führt man die Spulendrahtaufnahme als Blechkontakt aus, der mittels eines Aufnahmeschlitzes den Spulendraht aufnimmt, so lässt sich dadurch eine besonders einfache, leicht herzustellende und kostengünstige Spulendrahtaufnahme verwirklichen. Ist der Aufnahmeschlitz zur Wahrnehmung verschiedener Funktionen konturiert, so können verschiedene bekannte einzelne Arbeitsvorgänge makroskopisch in einen einzigen Fügeschritt zusammengefasst werden.

Weist der Aufnahmeschlitz eine Einführhilfe auf, so lässt sich der Draht besonders schnell und sicher kontaktieren.

Unter anderem ist vorgesehen, dass der Aufnahmeschlitz eine Schabekante zur Entfernung einer Drahtisolation hat, so dass sich mit dem Beginn des Fügevorgangs zunächst die Drahtisolation leicht und prozesssicher entfernen lässt. Folgt der Schabekante in Schlitz- bzw. Fügerichtung eine Schabefläche, so wird mittels dieser Schabefläche dafür gesorgt, dass letzte Reste bzw. Spuren der Drahtisolation entfernt werden. Des weiteren ist vorgesehen, dass sich der Schabekante in Schlitz- bzw. Fügerichtung eine Kontakt- bzw. Klemmzone anschließt, so dass sich nach dem Entfernen der Drahtisolation der Draht leicht und schnell mit der Spulendrahtaufnahme zuverlässig verbinden lässt.

Ist der Spulendraht in Drahtrichtung beiderseits einer vorgesehenen Klemmstelle fixiert, so biegt sich der Spulendraht während des Fügevorgangs nur geringfügig durch, wodurch wiederum mit dem Einfügen des Spulendrahts in den Aufnahmeschlitz eine sichere Verbindung unterstützt wird.

In einer weiteren Ausbildung der Erfindung ist vorgesehen, dass ein Spulenträger den Spulendraht mittels eines sogenannten Drahtlagers stützt. Dieses Drahtlager verhindert ein Durchbiegen des Spulendrahts in Fügerichtung, so dass dadurch wiederum verbesserte Maßnahmen vorgesehen sind, um den Fügeprozess sehr sicher zu gestalten. Des Weiteren ist vorgesehen, dass die Spulendrahtaufnahme zum Schutz der Verbindungsstelle in einem spulenseitigen Hohlraum aufgenommen ist, um dadurch ein Verschmutzen oder sonstige bspw. elektrochemische Angriffe auf die Verbindungsstelle zu vermeiden.

Gemäß einer weiteren Ausbildung der Erfindung ist vorgesehen, dass die Spulendrahtaufnahme mit den Versorgungsleitungen einstückig ausgebildet ist, so dass weitere Fügeprozesse für die Spulendrahtaufnahme vermieden werden können. Die Zuverlässigkeit der Verschaltung wird dadurch gesteigert.

### Zeichnungen

In den Zeichnungen sind Ausführungsbeispiele einer elektrischen Maschine sowie der Verbindungsstelle zwischen Spule und Ständerverdrahtung dargestellt. Es zeigen:
- Figur 1: eine symbolhafte Darstellung einer elektrischen Maschine,
- Figur 2: ausschnittsweise eine Darstellung von Teilen des Ständers in einem Gehäuse,
- Figur 3: eine Draufsicht auf eine Spulendrahtaufnahme,
- Figur 4: schrittweise den Fügevorgang des Spulendrahts in die Spulendrahtaufnahme,
- Figur 5: eine Einzelspule mit Details zum Spulendrahtende,
- Figur 6: ein weiteres Detail des Spulenträgers.

### Beschreibung

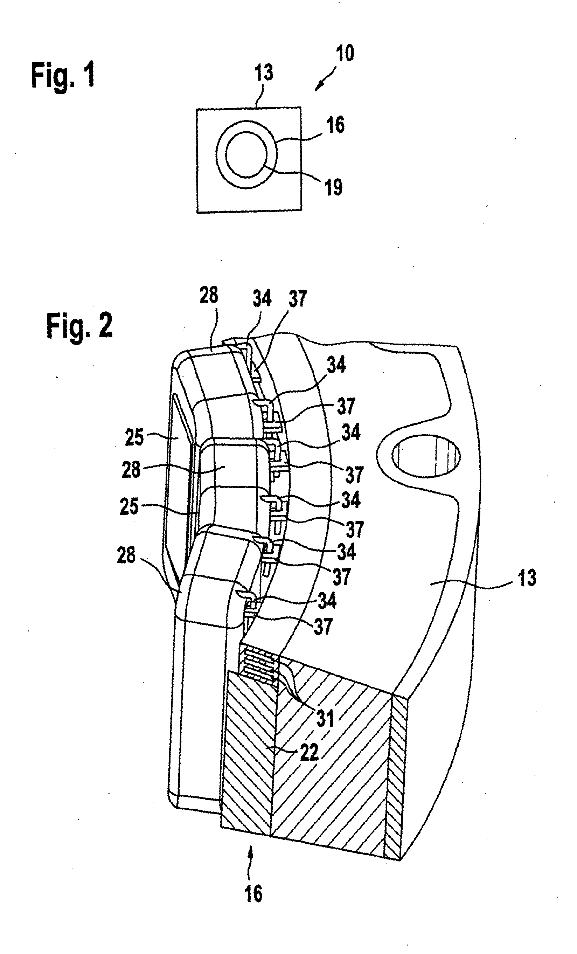

In Figur 1 ist in symbolhafter Darstellung eine elektrische Maschine 10 mit einem Gehäuse 13, einem Ständer 16 und einem Läufer 19 dargestellt. Wie üblich werden dabei sowohl der Ständer 16 als auch der Läufer 19 im Gehäuse 13 gehalten. Der Ständer 16 ist dabei fest im Gehäuse 13 gehalten, wobei der Läufer 19 üblicher Weise mittels zweier Wälzlager drehbar innerhalb des Ständers 16 gelagert ist.

Figur 2 zeigt ausschnittsweise einen Teil des Ständers 16 und seines Gehäuses 13. Der Ständer 16 weist hierbei ein sogenanntes Ständerjoch 22 auf, das sich üblicher Weise kreisförmig erstreckt und beispielsweise als sogenanntes Lamellenpaket aufgebaut ist. Vom Ständerjoch 22 ausgehend erstrecken sich üblicherweise nach radial innen, wie auch hier in diesem Fall, elektromagnetisch erregbare Pole 25. Diese Pole 25 sind von Spulen 28 umgeben, deren Achse sich nach radial außen erstreckt. Die in Figur 2 dargestellten drei Spulen 28 sind in Umfangsrichtung nacheinander angeordnet. Ist die elektrische Maschine 10, wie zum Beispiel in diesem Fall, als Drehstrommaschine vorgesehen, so sind diese drei verschiedenen Spulen 28 insgesamt drei verschiedenen Phasen zuzuordnen. Zu deren Versorgung sind in diesem Beispiel insgesamt drei Versorgungsleitungen 31 vorgesehen. Bezüglich der magnetisch leitfähigen Teile des Ständers 16 kann im übrigen die Gestaltung wie folgt variiert sein:

Entweder können das Ständerjoch 22 und die Pole 25 zusammen einstückig ausgeführt sein oder können Einzelpole 25 an das Ständerjoch 22 befestigt sein.

Jede Spule 28 hat zumindest einen Spulendraht 34, der in Spulenform gewickelt ist. Diese Spulendrähte 34 sind mit den Versorgungsleitungen 31 elektrisch zu kontaktieren. Hierzu ist erfindungsgemäß vorgesehen, dass von den Versorgungsleitungen 13 Spulendrahtaufnahmen 37 ausgehen, die dazu vorgesehen sind, die elektrische Verbindung zwischen den Spulen 28 und den Versorgungsleitungen 31 herzustellen. Der Kontakt zwischen Spulendraht 34 und Spulendrahtaufnahme 37 wird dadurch hergestellt, dass die Spulendrähte 34 in die einstückigen Spulendrahtaufnahmen eingeklemmt sind. Bei der Gestaltung der Spulendrahtaufnahme 37 ist vorgesehen, dass diese mit den Versorgungsleitungen 31 jeweils einstückig ausgebildet ist.

Es ist demzufolge eine elektrische Maschine 10 vorgesehen, insbesondere ein Startergenerator, der Spulen 28 aufweist, die über eine Verbindungsstelle mit Versorgungsleitungen 31 verbunden sind, wobei die Spulen 28 mit ihrem Spulendraht 34 durch Einklemmen in eine einstückige Spulendrahtaufnahme 37 elektrisch kontaktieren.

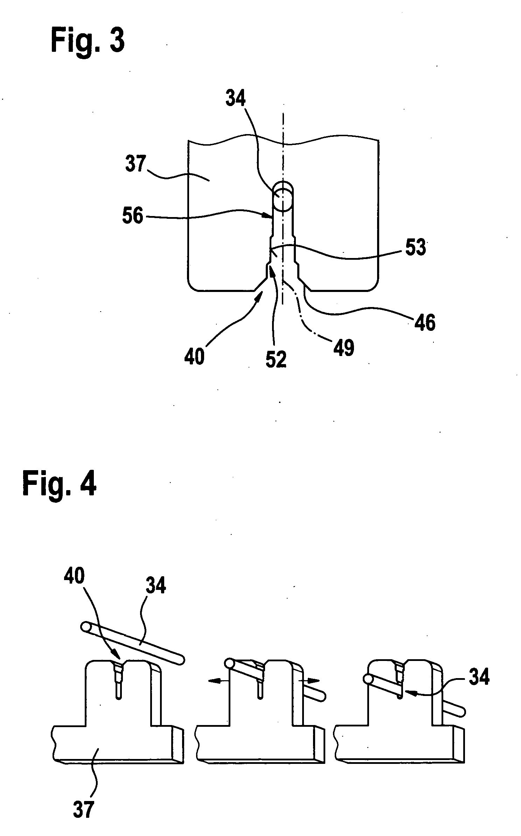

Figur 3 zeigt in einer Draufsicht ausschnittsweise eine Spulendrahtaufnahme 37. Die Spulendrahtaufnahme 37 ist als Blechkontakt, d.h. als ein Blech ausgebildet, das in etwa seiner Flächenmitte einen Aufnahmeschlitz 40 hat, der den Spulendraht 34 aufnimmt. Die Spulendrahtaufnahme 37 greift dabei den Spulendraht 34 seitlich, und zwar auf zwei gegenüberliegenden Seiten des Spulendrahts 34. Die Seiten des Spulendrahts 34 bilden dabei einen Teil der im Grunde genommen zylindermantelförmigen Oberfläche.

Der Aufnahmeschlitz 34 ist dabei so gestaltet, dass dieser zur Wahrnehmung verschiedener Funktionen konturiert ist. An seinem stirnseitigen Ende 43, das im übrigen zur zu kontaktierenden Spule 28 gerichtet ist, befindet sich zunächst eine sogenannte Einführhilfe 46, die aus zwei den Aufnahmeschlitz 40 begrenzenden, zueinander nicht parallel sondern trichterförmig gerichteten Flanken besteht. Diese Einführhilfe erleichtert das Einführen, ganz besonders das schnelle Einführen des Spulendrahts 34in den Aufnahmeschlitz 40. Die Bewegung des einzuführenden Spulendrahts 34 ist im wesentlichen geradlinig und verläuft entlang einer Linie 49, die hier als Symmetrielinie des Aufnahmeschlitzes 40 anzusehen ist. Nach der Einführhilfe 46 folgt in Richtung zum Ende des Aufnahmeschlitzes 40 zunächst beidseitig jeweils zur Linie 49 gerichtet eine Schabekante 52. Diese Schabekante dient dazu, beispielsweise eine Lackisolation des Spulendrahts 34 durch Abspanen zu entfernen, so dass der Spulendraht 34 nach dem Passieren dieser Schabekante 52 an der zu kontaktierenden Stelle isolationsstofffrei ist.

An die Schabekanten 52 schließt sich in Richtung zum Ende des Aufnahmeschlitzes 40 eine Schabefläche 53 an, die gegebenenfalls letzte Isolationsstoffreste abscheuert. An die Schabeflächen 53 schließt sich die Kontakt- bzw. Klemmzone 56 an. Diese Kontakt- bzw. Klemmzone 56 ist im Wesentlichen parallelflankig und hat eine kleinere lichte Weite, als der unlackierte Spulendraht 34 vor Beginn der Montage. In dieser Kontakt- bzw. Klemmzone 56 wird der Spulendraht 34 sicher festgehalten, so dass sich somit eine zuverlässige Verbindungsstelle zwischen Spulendraht 34 und Spulendrahtaufnahme 37 ergibt.

Figur 4 verdeutlicht in drei verschiedenen Schritten diesen Klemmvorgang. Zunächst wird der Spulendraht 34 quer zur Spulendrahtaufnahme 37 ausgerichtet und in Richtung der Linie 49 in den Aufnahmeschlitz 40 bewegt. Dabei weiten sich jene zwei Bereiche der Spulendrahtaufnahme 37, die beiderseits des Aufnahmeschlitzes 40 angeordnet sind. Schließlich wird der Spulendraht 34 in die Kontakt- bzw. Klemmzone 56 bewegt.

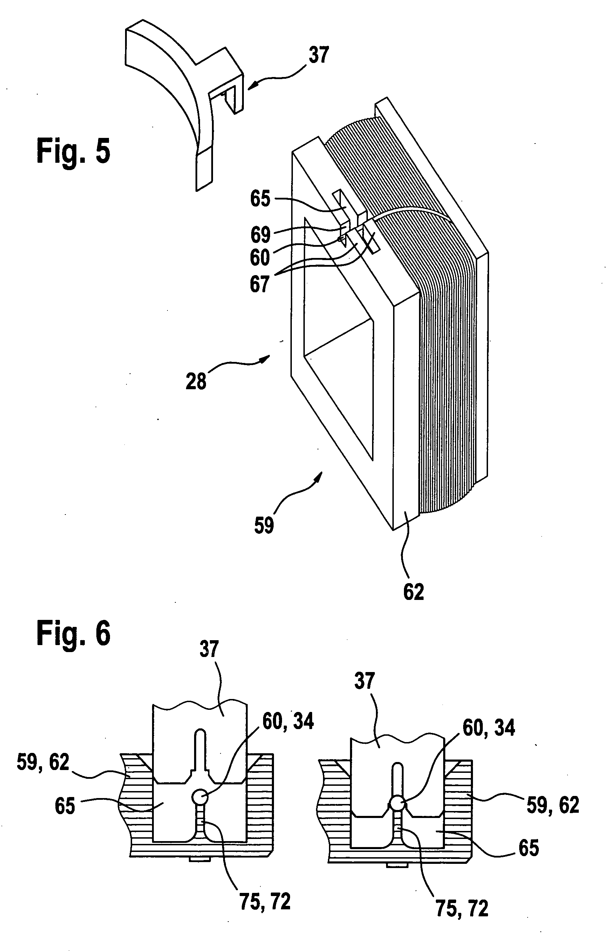

Bezüglich Verfahrens- und Montagetechnik ist das Einführen eines solchen freien Dahtendes des Spulendrahts 34 natürlich von einer gewissen Problematik begleitet. Um hier einen möglichst sicheren Prozess während des Fügevorgangs zu erhalten, ist dabei, wie in Figur 5 dargestellt, vorgesehen, dass ein mit der Spulendrahtaufnahme 37 zu kontaktierendes Spulendrahtende 60 in Drahtrichtung beidseitig einer vorgesehenen Klemmstelle fixiert ist. Hierzu ist vorgesehen, dass ein Spulenträger einen Rand 62 aufweist, der einerseits die Lage der Spule 28 auf diesem Spulenträger 59 bestimmt und andererseits eben das Drahtende 60 hält. Hierzu ist ein Hohlraum 65 gebildet, der sich im Rand 62 befindet. Dieser Hohlraum 65 ist in Achsrichtung der Spule, d.h. bezogen auf die elektrische Maschine 10 in radialer Richtung, von zwei Stegen 67 begrenzt. Diese beiden Stege 67 sind voneinander beabstandet und begrenzen den Hohlraum 65 in radialer Richtung. Die Stege 67 sind bezogen auf die Lage der elektrischen Maschine bzw. Achsen der elektrischen Maschine 10 in axialer Richtung geschlitzt. In die beiden dadurch zur Verfügung stehenden Schlitze 69 ist das Drahtende 60 eingeklemmt und dort sicher gehalten. Der Spulendraht 34 ist damit in Drahtrichtung beidseitig einer vorgesehenen Klemmstelle fixiert. Diese so vorbereitete Spule 28 wird schließlich relativ zur Spulendrahtaufnahme 37 bewegt und diese Spulendrahtaufnahme 37 schließlich in den Hohlraum 65 derartig eingeführt, dass der Spulendraht 34 bzw. das Drahtende 60 in den Aufnahmeschlitz 40 eingeführt wird. Dadurch, dass der Spulenträger 59 den Spulendraht 34 in Drahtrichtung beidseitig der vorgesehenen Klemmstelle fixiert, ist somit ein sehr zuverlässiges Klemmen möglich.

Eine weitere Verbesserung ist dadurch möglich, dass man den Spulendraht 34 bzw. das Drahtende 60 in Fügerichtung gegen die Bewegung bzw. Relativbewegung zwischen Spulendrahtaufnahme 37 und Spule 28 von dessen Rückseite mittels eines Drahtlagers 72 stützt. Dazu ist der Spulenträger 59 so ausgebildet, dass sich hinter dem Drahtende 60 ein Steg 75 befindet. Der Spulenträger 59 stützt somit den Spulendraht 34 mittels dieses Drahtlagers 72. Dadurch, dass die Spulendrahtaufnahme 37 nach der Montage in diesem spulenseitigen Hohlraum 65 aufgenommen ist, wird die Verbindungsstelle geschützt.

## Patentansprüche

1. Elektrische Maschine, insbesondere Startergenerator, mit Spulen (28), die über eine Verbindungsstelle mit Versorgungsleitungen (31) verbunden sind, **dadurch gekennzeichnet, dass** die Spulen (28) mit ihrem Spulendraht (34) durch Einklemmen in einer einstückigen Spulendrahtaufnahme elektrisch kontaktieren.

2. Elektrische Maschine nach Anspruch 1, **dadurch gekennzeichnet, dass** die Spulendrahtaufnahme (37) den Spulendraht (34) seitlich greift.

3. Elektrische Maschine nach Anspruch 2, **dadurch gekennzeichnet, dass** die Spulendrahtaufnahme (37) als Blechkontakt ausgebildet ist, der mittels eines Aufnahmeschlitzes (40) den Spulendraht (34) aufnimmt.

4. Elektrische Maschine nach Anspruch 3, **dadurch gekennzeichnet, dass** der Aufnahmeschlitz (40) zur Wahrnehmung verschiedener Funktionen konturiert ist.

5. Elektrische Maschine nach Anspruch 4, **dadurch gekennzeichnet, dass** der Aufnahmeschlitz eine Einführhilfe (46) aufweist.

6. Elektrische Maschine nach Anspruch 4 oder 5, **dadurch gekennzeichnet, dass** der Aufnahmeschlitz (40) eine Schabekante (52) zur Entfernung einer Drahtisolation hat.

7. Elektrische Maschine nach Anspruch 6, **dadurch gekennzeichnet, dass** der Schabekante (52) in Schlitz- bzw. Fügerichtung eine Schabefläche (53) folgt.

8. Elektrische Maschine nach Anspruch 6 oder 7, **dadurch gekennzeichnet, dass** der Schabekante (52) in Schlitz- bzw. Fügerichtung eine Kontakt- bzw. Klemmzone (56) folgt.

9. Elektrische Maschine nach einem der vorstehenden Ansprüche, **dadurch gekennzeichnet, dass** der Spulendraht (34) in Drahtrichtung beiderseits einer vorgesehenen Klemmstelle fixiert ist.

10. Elektrische Maschine nach Anspruch 9, **dadurch gekennzeichnet, dass** ein Spulenträger (59) den Spulendraht (34) in Drahtrichtung beiderseits der vorgesehenen Klemmstelle fixiert.

11. Elektrische Maschine nach Anspruch 9 oder 10, **dadurch gekennzeichnet, dass** der Spulenträger (59) den Spulendraht (34) mittels eines Drahtlagers (72) stützt.

12. Elektrische Maschine nach einem der vorstehenden Ansprüche, **dadurch gekennzeichnet, dass** die Spulendrahtaufnahme (37) zum Schutz der Verbindungsstelle in einem spulenseitigen Hohlraum (65) aufgenommen ist.

13. Elektrische Maschine nach einem der vorstehenden Ansprüche, **dadurch gekennzeichnet, dass** die Spulendrahtaufnahme (37) mit einer Versorgungsleitung (31) einstückig ausgebildet ist.
